# EUROPEAN PATENT APPLICATION

(11) **EP 1 768 291 A1**
(43) Date of publication of application: **28.03.2007**
(21) Application number: 04802501.9
(22) Date of filing: 21.12.2004
(51) Int. Cl.: H04J 13/00, H04B 7/005, H04Q 7/30

(54) **A METHOD FOR ADJUSTING DYNAMICALLY SUBSIDIARY CARRIER FREQUENCY IN THE MULTIPLE CARRIER FREQUENCIES CELL**

(30) Priority: 29.06.2004 CN 200410009278; 14.08.2004 CN 200410051146
(71) Applicant: ZTE Corporation, Shenzhen 518057 (CN)
(72) Inventor: ZHANG, Y., ZTE Plaza, Shenzhen, Guangdong 518057 (CN); MA, Z., ZTE Plaza, Shenzhen, Guangdong 518057 (CN); WU, B., ZTE Plaza, Shenzhen, Guangdong 518057 (CN)
(74) Representative: Jorio, Paolo
(86) International application number: PCT/CN2004/001488
(87) International publication number: WO 2006/000135

(57) **Abstract**

The present invention discloses a method for dynamically adjusting secondary carriers in a multi-carrier cell. First of all, a radio network controller transfers a message of adding or/and modifying or/and deleting the secondary carrier to a node by an IuB interface which is between the radio network controller and the node. After receiving the message of adding or/and modifying or/and deleting the secondary carrier, the node then performs adding or/and modifying or/and deleting operations of the secondary carrier according to the content of the message. The present invention can dynamically adjust the network capacity and satisfy the change of service requirement without affecting the present service at all or minimizing the affect to the present service. And when performing the management of radio resources, under the precondition of satisfying the cell capacity requirement, the present invention can also dynamically delete redundant secondary carriers according to the cell capacity, so that the interference among the frequencies can be decreased.

## Description

### Field of the Invention

The present invention relates to a method for a cell to dynamically support multi-carrier in a radio communication system, and especially, relates to a method for a multi-carrier cell to dynamically adjust a secondary carrier in the Time Division-Synchronous Code Division Multiple Access (TD-SCDMA) standard radio communication system.

### Background Art

Like other mobile communication systems, for the TD-SCDMA system, covering multi-carrier in a same sector/cell is an important means for expanding the capacity of the TD-SCDMA system, so as to meet the increasing demands in the mobile communication market.

Multi-carrier of the current TD-SCDMA (i.e. LCR TDD) standard are individually taken into consideration, that is, the operations and configurations of the Uu interface for radio resources are for one carrier, and during the cell setup procedure of the IuB interface, one cell is just configured with one absolute frequency number; and in the case of multiple carriers, each carrier is regarded as a logic cell. For example, in the case of three sectors and three carriers, it is regarded that there are nine logic cells, and individual operation for each cell is conducted, that is, the nine cells send their respective pilots and broadcast information. In this case, each carrier of a multi-carrier system should be configured with a set of complete common channels, wherein the broadcast channel (short for BCH), the forward access channel (short for FACH), and the paging channel (short for PCH) are all omni directional channels. Then a multi-carrier base station has a very high requirement on the power of a transmitter in actual networking, and also, in the case of co-frequency networking, interference of the broadcast channel among carriers is also very serious, and meanwhile, the system has a very low efficiency.

In view of the above defects, for an area covered by multiple carriers, pilots and broadcast information are sent only at one carrier of the cell/sector, and multiple carriers use common broadcast information and pilot channel. And the detailed solution is as follows: for each sector, one of N carriers allocated is determined as a primary carrier, and in the same sector, downlink pilot time slot (short for DwPTS), uplink pilot time slot (short for UpPTS), and broadcast information (TSO) are only sent at the primary carrier.

During the cell setup procedure and the corresponding message, they must include the configuration information of the primary carrier and clearly indicate the frequency of the primary carrier and the common channel configured at the primary carrier, and can include the configuration information of zero or N secondary carriers. Node B sends the broadcast information at the primary carrier, and the broadcast message includes the configuration of the common channel at the primary carrier and the configuration of the secondary carriers of the cell.

With the dynamic adjustment of the capacity of the network, it is necessary to dynamically add and delete the secondary carriers in a cell; and further, due to the changes of uplink and downlink service requirements, it is necessary to modify the uplink and downlink allocation of the time slot resources of the primary carrier and the secondary carriers, however, there is no relevant procedure in the current standard to realize such functions.

### Summary of the Invention

The present invention aims to provide a method for dynamically adjusting the secondary carrier in a multi-carrier cell, so as to meet the requirement that the TD-SCDMA standard radio communication system should be adjusted dynamically according to the service requirements and the network capacity.

In order to realize the above object, the present invention provides a method for dynamically adjusting the secondary carrier in a multi-carrier cell, comprising the following steps:
step 1, a radio network controller (RNC) sends a message of adding or/and modifying or/and deleting the secondary carrier to a node through the IuB interface which is between the radio network controller and the node (Node B); and
step 2, after receiving the message of adding or/and modifying or/and deleting the secondary carrier, the node performs operations of adding or/and modifying or/and deleting the secondary carrier according to the contents of the message.

Wherein, in step 1, the method for the radio network controller to send the message of adding or/and modifying or/and deleting the secondary carrier to the node is through modifying or/and adding a corresponding information element in the existing cell reconfiguration request message of the cell reconfiguration procedure of the IuB interface.

In addition, in step 1, the method for the radio network controller to send the message of adding or/and modifying or/and deleting the secondary carrier to the node can also be that the radio network controller adds a secondary carrier adding or/and modifying or/and deleting procedure or adds a secondary carrier reconfiguration procedure in the NBAP (Node B Application Part) protocol at the IuB interface, and the secondary carrier reconfiguration procedure includes the adding or/and modifying or/and deleting procedure of the secondary carrier.

According to the changes of the network capacity and the service demands, the present invention solves the problem of dynamically adding or/and modifying or/and deleting the secondary carrier in an area that needs to be covered by multi-carrier cells. Without affecting the present service or minimizing the affect to the same, the present invention can dynamically adjust the network capacity and meet the changes of service demands, and when managing the radio resources, under the precondition of meeting the capacity demand of the cell, the present invention can also dynamically delete the redundant secondary carriers according to the capacity of the cell, so that the interference among the frequencies can be decreased.

### Brief Description of the Accompanying Drawings

The technical resolutions of the present invention will be detailed by the embodiments, in conjunction with the drawings.
Figure 1 is a flow chart of one embodiment of the method according to the present invention;
Figure 2 is a schematic view of the IuB interface between the RNC and Node B in the present invention;
Figure 3 is a schematic view showing the reconfiguration and response procedures of the secondary carrier according to the present invention; and
Figure 4 is a view showing the procedures of adding, modifying, and deleting the secondary carrier and the corresponding response procedures according to the present application.

### Embodiments for Carrying Out the Present Invention

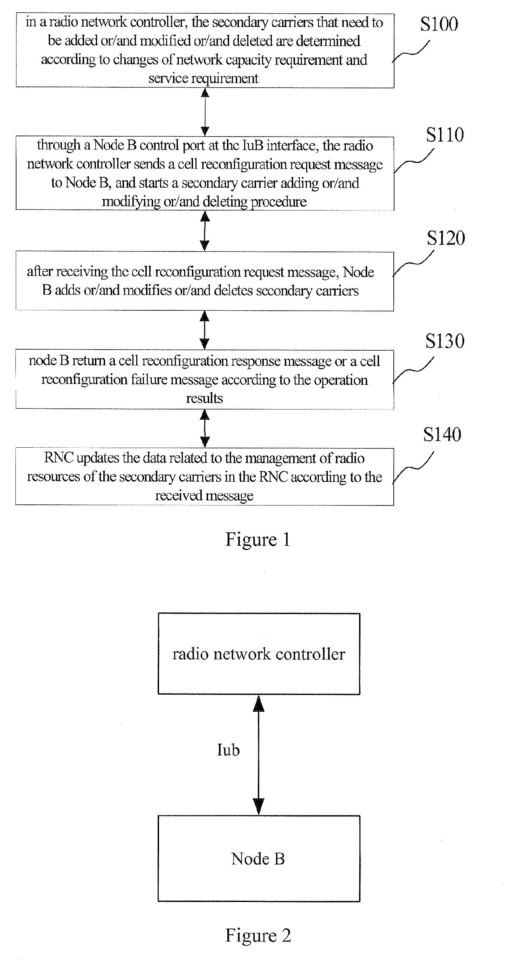

As shown in figure 1, the method for dynamically adjusting the secondary carrier in a multi-carrier cell comprises the following steps:
step 1, the radio network controller sends the message of adding or/and modifying or/and deleting the secondary carrier to a node through the IuB interface between the radio network controller and the node (Node B); and
step 2, after receiving the message of adding or/and modifying or/and deleting the secondary carrier, the node conducts the operations of adding or/and modifying or/and deleting the secondary carrier according to the contents of the message.

In addition, in step 1, the method for the radio network controller to send the message of adding or/and modifying or/and deleting the secondary carrier to the node can be multiple, for example, through a method of modifying or/and adding a corresponding information element in a cell reconfiguration request message during an existing cell reconfiguration procedure of the IuB interface.

Through including a secondary carrier adding information element or/and a secondary carrier modifying information element or/and a secondary carrier deleting information element in the cell reconfiguration request message sent to the node by the radio network controller, the radio network controller starts the secondary carrier adding or/and modifying or/and deleting procedure; after receiving the cell reconfiguration request message, the node adds or/and modifies or/and deletes the secondary carriers according to the secondary carrier adding information element or/and the secondary carrier modifying information element or/and the secondary carrier deleting information element included in the cell reconfiguration request message.

The following steps are specifically comprised:
step S100, the radio network controller determines the secondary carriers that need to be added or/and modified or/and deleted according to changes of the network capacity demand and the service demand; in the case of expansion of the network capacity and change of the service demand, or according to requirement on managing the radio resources, it is determined in the RNC that one or more secondary carriers are added or/and deleted in a multi-carrier cell, or the configuration of one or more secondary carriers is modified, and the frequencies of the secondary carriers involved are determined according to the frequency resource provided by the network service provider. For modifying the configuration of a secondary carrier, the contents that should be modified should be determined.

Step S110, through the Node B control port at the IuB interface, the radio network controller sends a cell reconfiguration request message to Node B, and the message includes a secondary carrier adding information element or/and a secondary carrier modifying information element or/and a secondary carrier deleting information element, thereby starting the secondary carrier adding or/and modifying or/and deleting procedure. And the procedure can be realized through, in the existing cell reconfiguration request message, adding the secondary carrier adding information element or/and the secondary carrier modifying information element or/and the secondary carrier deleting information element, which include the following:
the added secondary carrier information element (UARFCN Information To Add LCR IE) includes a frequency information element (UARFCN IE) and a time slot configuration information element (Time Slot Configuration LCR IE) of the secondary carrier;
the modified secondary carrier information element (UARFCN Information To Modify LCR IE) includes a frequency information element (UARFCN IE) and a time slot configuration information element (Time Slot Configuration LCR IE) of the secondary carrier; and
the deleted secondary carrier information element (UARFCN Information To Delete LCR IE) includes a frequency information element (UARFCN IE) of the secondary carrier.

Step S120, after receiving the cell reconfiguration request message, the node adds or/and modifies or/and deletes the secondary carriers through the secondary carrier adding information element or/and the secondary carrier modifying information element or/and the secondary carrier deleting information element included in message. If the cell reconfiguration request message includes the added secondary carrier information element, the node will add secondary carriers in the cell according to the frequency information of the secondary carrier and the time slot configuration information indicated in the added secondary carrier information element; if the cell reconfiguration request message includes the modified secondary carrier information element, the node will modify the configuration of the secondary carrier in the cell according to the frequency information and the time slot configuration information of the secondary carrier indicated in the modified secondary carrier information element; and if the cell reconfiguration request message includes the deleted secondary carrier information element, the node will delete the secondary carrier in the cell according to the frequency information of the secondary carrier indicated in the deleted secondary carrier information element, and delete all the dedicated channels at the secondary carrier, set the state of the deleted carrier in the cell as "not exist", Node B will delete all the radio links related to the secondary carrier and corresponding Node B communication contexts. And also, Node B will initiate to the release of the transmission bearing of the dedicated channels at the secondary carriers in the cell bearing a user plane.

Step S130, moreover, if the node succeeds in adding or/and modifying or/and deleting the secondary carrier, then a cell reconfiguration response message is returned; if not, a cell reconfiguration failure message is returned.

Step S140, if RNC receives the cell reconfiguration response message returned when the node succeeds in operation, the data related to the management over the radio resources of the adjusted secondary carrier in RNC are updated; if the RNC receives the cell reconfiguration failure message returned when the node fails in operation, the data related to the management of the radio resources in the radio network controller will not be updated and corresponding operations for failure will be performed.

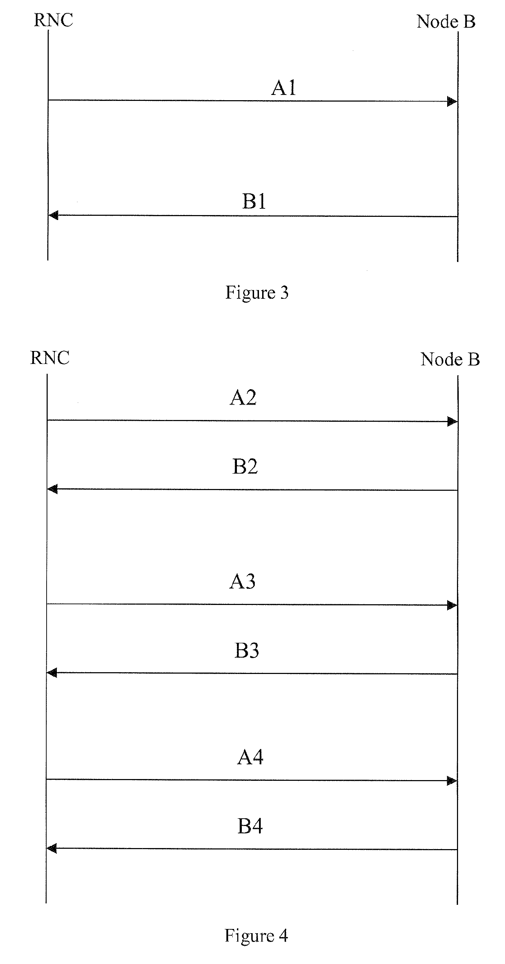

In addition, in step 1, the method for the radio network controller to send the message of adding or/and modifying or/and deleting the secondary carrier to the node can be that the radio network controller adds the secondary carrier adding or/and modifying or/and deleting procedure in the NBAP protocol at the IuB interface, or adds the secondary carrier reconfiguration procedure, and the secondary carrier reconfiguration procedure includes the procedure of adding or/and modifying or/and deleting the secondary carrier. Wherein, the IuB interface between the RNC and Node B is shown in figure 2. The procedure of adding the secondary carrier reconfiguration is shown in figure 3; and the procedure of adding the secondary carrier to add or/and modify or/and delete is shown in figure 4.

During adding the secondary carrier adding or/and modifying or/and deleting procedure in the NBAP protocol at the IuB interface, the radio network controller sends a secondary carrier adding or/and modifying or/and deleting request message to the node through a node control port at the IuB interface; during the secondary carrier adding or/and modifying or/and deleting procedure in the procedure of adding the secondary carrier reconfiguration, the radio network controller sends a secondary carrier reconfiguration request message to the node through the node control port at the IuB interface, and the secondary carrier reconfiguration request message includes a secondary carrier adding information element or/and a secondary carrier modifying information element or/and a secondary carrier deleting information element.

The secondary carrier adding information element in the secondary carrier adding request message or the secondary carrier reconfiguration request message includes a cell identification information element (C-ID IE) of the cell that the added secondary carrier the secondary carrier belongs to, which indicates which cell the secondary carrier belongs to, and a frequency information element (UARFCN IE) indicating the frequency attribute of the secondary carrier as well as a time slot configuration information element (Time Slot Configuration LCR IE) of the secondary carrier; the secondary carrier modifying information element in the secondary carrier modifying request message or the secondary carrier reconfiguration request message includes a identification information element (C-ID IE) which indicates the cell that the modified secondary carrier belongs to, and a frequency information element (UARFCN IE) indicating the frequency attribute of the secondary carrier as well as a time slot configuration information element (Time Slot Configuration LCR IE) of the secondary carrier; the secondary carrier deleting information element in the secondary carrier deleting request message or the secondary carrier reconfiguration request message includes a identification information element (C-ID IE) which indicates the cell that the deleted secondary carrier belongs to, and a frequency information element (UARFCN IE) indicating the frequency attribute of the secondary carrier.

As shown in figure 3, the radio network controller sends a secondary carrier reconfiguration request message A1 to the node through the node control port at the IuB interface, and the secondary carrier reconfiguration request message includes the secondary carrier adding information element or/and the secondary carrier modifying information element or/and the secondary carrier deleting information element; if the node receives the secondary carrier adding information element in the secondary carrier reconfiguration request message, the node adds a secondary carrier in a cell according to the cell identification information element, the frequency information element of the secondary carrier in the secondary carrier adding information element and the parameter information in the time slot configuration information element. Then Node B returns a message B1 according to the operation result, and the message can be an operation succeeding message or an operation failure message.

As shown in figure 4, the radio network controller sends a secondary carrier adding request message A2 to the node through the node control port at the IuB interface, and the secondary carrier adding request message includes the cell identification information element of the cell to which the added secondary carrier belongs, and the frequency information element indicating the frequency attribute of the secondary carrier as well as the time slot configuration information element of the secondary carrier; the node receives the secondary carrier reconfiguration request message, it adds one or more secondary carriers in a cell according to the cell identification information element, the frequency information element of the secondary carrier in the secondary carrier adding information element and the parameter information in the time slot configuration information element; a message B2 is returned according to the operation result, and the message can be an operation succeeding message or an operation failure message.

The radio network controller sends a secondary carrier modifying request message A3 to the node through the node control port at the IuB interface, and the secondary carrier modifying request message includes the cell identification information element of the cell (C-ID IE) to which the modified secondary carrier belongs, and the frequency information element (UARFCN IE) indicating the frequency attribute of the secondary carrier as well as the time slot configuration information element (Time Slot Configuration LCR IE) of the secondary carrier; after receiving the secondary carrier modifying request message, the node modifies the configuration of one or more secondary carriers in a cell according to the cell identification information element of the cell, the frequency information element of the secondary carrier in the secondary carrier modifying request message and the parameter information in the time slot configuration information element; a message B3 is returned according to the operation result, and the message can be an operation succeeding message or an operation failure message.

The radio network controller sends a secondary carrier deleting request message A4 to the node through the node control port at the IuB interface, and the secondary carrier deleting request message includes the cell identification information element of the cell (C-ID IE) to which the deleted secondary carrier belongs, and the frequency information element (UARFCN IE) indicating the frequency attribute of the secondary carrier; after receiving the secondary carrier deleting request message, the node deletes one or more secondary carriers in a cell according to the cell identification information element of the cell in the secondary carrier deleting request message and the parameter information in the frequency information element of the secondary carrier, and deletes all the dedicated channels at these secondary carriers, sets the state of the deleted secondary carriers in the cell as "not exist", deletes all the radio links related to these secondary carriers in the cell and corresponding node communication contexts, and initiates the release of the transmission bearing of the dedicated channels at the secondary carrier in the cell bearing a user plane; a message B4 is returned according to the operation result, and the message can be an operation succeeding message or an operation failure message.

After receiving the secondary carrier adding request message A2 or/and the secondary carrier modifying request message A3 or/and the secondary carrier deleting request message A4, or the secondary carrier reconfiguration request message A1, the node adds or/and modifies or/and deletes secondary carriers according to the parameters in the message, and returns messages B2, B3, B4, or B1 according to the operation result, and the returned messages can be a response message for the operation success or a failure message for the operation, and the failure message includes a failure cause information element.

In RNC, after the secondary carrier adding or/and modifying or/and deleting response message, or the secondary carrier reconfiguration response message is received, the data related to the management of the radio resources of the adjusted secondary carrier in RNC are updated; if the RNC receives the secondary carrier adding or/and modifying or/and deleting failure message, or the secondary carrier reconfiguration failure message, the data related to the management of the radio resources in the radio network controller will not be updated and corresponding operations for failure will be performed.

While the present invention has been particularly shown and described with reference to the embodiments thereof, it will be understood by those skilled in the art that any amendment or equivalent replacement made to the technical solution of the present invention without departing from the spirit and scope of the present invention shall all be covered by the scope of the claims of the present invention.

## Claims

1. A method for dynamically adjusting a secondary carrier in a multi-carrier cell, comprising the following steps:
step 1, a radio network controller sends an adding or/and modifying or/and deleting message of the secondary carrier to a node through the IuB interface which is between the radio network controller and the node; and
step 2, after receiving the adding or/and modifying or/and deleting message of the secondary carrier, the node performs adding or/and modifying or/and deleting operation of the secondary carrier according to the contents of the message.

2. The method for dynamically adjusting a secondary carrier in a multi-carrier cell according to claim 1, **characterized in that** in step 1, the method for the radio network controller to send the adding or/and modifying or/and deleting message of the secondary carrier to the node is to modify or/and add a corresponding information element in a cell reconfiguration request message during a cell reconfiguration procedure of the IuB interface.

3. The method for dynamically adjusting a secondary carrier in a multi-carrier cell according to claim 2, **characterized in that** the information element comprises:
an added secondary carrier information element or/and an modified secondary carrier information element or/and a deleted secondary carrier information element.

4. The method for dynamically adjusting a secondary carrier in a multi-carrier cell according to claim 3, **characterized in that** the added secondary carrier information element comprises a frequency information element and a time slot configuration information element of the secondary carrier;
the modified secondary carrier information element comprises a frequency information element and a time slot configuration information element of the secondary carrier; and
the deleted secondary carrier information element comprises a frequency information element of the secondary carrier.

5. The method for dynamically adjusting a secondary carrier in a multi-carrier cell according to claim 4, **characterized in that** in step 2, that the node adds or/and modifies or/and deletes the secondary carrier according to the contents of the message comprises the following procedures:
if the cell reconfiguration request message includes the added secondary carrier information element, the node will add secondary carriers in the cell according to the frequency information of the secondary carrier and the time slot configuration information indicated in the added secondary carrier information element;
if the cell reconfiguration request message includes the modified secondary carrier information element, the node will modify the configurations for modifying the secondary carrier in the cell according to the frequency information and the time slot configuration information indicated in the modified secondary carrier information element; and
if the cell reconfiguration request message includes the deleted secondary carrier information element, the node will delete the secondary carrier in the cell according to the frequency information of the secondary carrier indicated in the deleted secondary carrier information element, and delete all the dedicated channels at the secondary carrier, set the state of the deleted carrier in the cell as "not exist", and delete all the radio links related to the secondary carrier and the corresponding node communication contexts in the cell, meanwhile, the node initiate the release of the transport bearer of user plane for the dedicated channels at the secondary carriers in the cell.

6. The method for dynamically adjusting a secondary carrier in a multi-carrier cell according to claim 1, **characterized in that** in step 1, the method for the radio network controller to send the adding or/and modifying or/and deleting message of the secondary carrier to the node can be that the radio network controller adds a secondary carrier adding or/and modifying or/and deleting procedure in the NBAP protocol at the IuB interface, or adds a secondary carrier reconfiguration procedure, and the secondary carrier reconfiguration procedure includes the adding or/and modifying or/and deleting procedure of the secondary carrier.

7. The method for dynamically adjusting a secondary carrier in a multi-carrier cell according to claim 6, **characterized in that** the procedure of adding the secondary carrier adding or/and modifying or/and deleting procedure in the NBAP protocol at the IuB interface is that the radio network controller sends a secondary carrier adding or/and modifying or/and deleting request message to the node through a node control port at the IuB interface; the procedure of adding or/and modifying or/and deleting the secondary carrier in the procedure of the secondary carrier reconfiguration procedure is that the radio network controller sends a secondary carrier reconfiguration request message to the node through the node control port at the IuB interface, and the secondary carrier reconfiguration request message includes a secondary carrier adding information element or/and a secondary carrier modifying information element or/and a secondary carrier deleting information element.

8. The method for dynamically adjusting a secondary carrier in a multi-carrier cell according to claim 7, **characterized in that** the secondary carrier adding information element in the secondary carrier adding request message or the secondary carrier reconfiguration request message includes a identification information element for indicating the cell that the added secondary carrier belongs to, and a frequency information element indicating the frequency attribute of the secondary carrier as well as a time slot configuration information element of the secondary carrier;
the secondary carrier modifying information element in the secondary carrier modifying request message or the secondary carrier reconfiguration request message includes a identification information element for indicating the cell that the modified secondary carrier belongs to, and a frequency information element indicating the frequency attribute of the secondary carrier as well as a time slot configuration information element of the secondary carrier; and
the secondary carrier deleting information element in the secondary carrier deleting request message or the secondary carrier reconfiguration request message includes a identification information element for indicating the cell that the deleted secondary carrier belongs to, and a frequency information element indicating the frequency attribute of the secondary carrier.

9. The method for dynamically adjusting a secondary carrier in a multi-carrier cell according to claim 8, **characterized in that** in step 2, the operation that the node adds or/and modifies or/and deletes secondary carriers according to the contents of the message specifically comprises the following procedures:
if the message received by the node is the secondary carrier adding information element in the cell reconfiguration request message, or the secondary carrier adding request message, or the secondary carrier adding information element in the secondary carrier reconfiguration request message, the node adds one or more secondary carriers in a cell according to the cell identification information element, the frequency information element of the secondary carrier in the secondary carrier adding information element and the parameter information in the time slot configuration information element;
if the message received by the node is the secondary carrier modifying information element in the cell reconfiguration request message, or the secondary carrier modifying request message, or the secondary carrier modifying information element in the secondary carrier reconfiguration request message, the node modifies the configurations for modifying one or more secondary carriers in a cell according to the cell identification information element, and the frequency information element of the secondary carrier in the secondary carrier modifying information element or the secondary carrier modifying request message, and the parameter information in the time slot configuration information element; and
if the message received by the node is the secondary carrier deleting information element in the cell reconfiguration request message, or the secondary carrier deleting request message, or the secondary carrier deleting information element in the secondary carrier reconfiguration request message, the node deletes one or more secondary carriers in a cell according to the cell identification information element, and the parameter information in the frequency information element of the secondary carrier in the secondary carrier deleting information element or the secondary carrier deleting request message, and deletes all the dedicated channels at these secondary carriers, sets the state of the deleted secondary carriers in the cell as "not exist", deletes all the radio links related to these secondary carriers in the cell and the corresponding node communication contexts, and initiates the release of the transport bearer of the user plane for the dedicated channels at the secondary carriers in the cell.

10. The method for dynamically adjusting a secondary carrier in a multi-carrier cell according to any of claims 1-9, **characterized in that** the method further comprises the following steps:
step 3, the node sends an operation success response message or an operation failure message to the radio network controller according to the operation results; and
step 4, if the radio network controller receives the operation success response message sent from the node, it updates the data related to the management of the radio resources of the adjusted secondary carrier in the radio network controller; if the radio network controller receives the operation failure message sent from the node, the radio network controller will not update the data related to the management of the radio resources of the adjusted secondary carrier in the radio network controller, and the corresponding operations for failure will be performed.
